# EUROPEAN PATENT SPECIFICATION

(11) **EP 3 104 266 B1**
(45) Date of publication and mention of the grant of the patent: **04.03.2020**
(21) Application number: 16176227.3
(22) Date of filing: 20.01.2011
(51) Int. Cl.: G06F 3/0488, G06F 1/16, G06F 3/0481

(54) **THREE-DIMENSIONAL, MULTI-DEPTH PRESENTATION OF ICONS ASSOCIATED WITH A USER INTERFACE**
DREIDIMENSIONALE, MEHRERE TIEFENEBENEN UMFASSENDE DARSTELLUNG VON MIT EINER BENUTZERSCHNITTSTELLE ASSOZIIERTER IKONEN
PRÉSENTATION TRIDIMENSIONNELLE SUR PLUSIEURS PROFONDEURS D'ICÔNES ASSOCIÉES À UNE INTERFACE D'UTILISATEUR

(43) Date of publication of application: 14.12.2016
(62) Divisional of application: 11704343.0
(73) Proprietor: BlackBerry Limited, Waterloo, ON N2K 0A7 (CA)
(72) Inventor: DELUCA, Michael Joseph, Boca Raton, FL 33432 (US)
(74) Representative: Hanna Moore + Curley

(56) References cited:
- EP-A1- 1 667 471
- EP-A1- 1 873 702
- US-A1- 2006 236 251
- US-A1- 2010 277 420

## Description

### Technical Field

This disclosed concept relates generally to the presentation of icons associated with a user interface and more particularly to the use of three-dimensional displays in these regards.

### Background

Graphical user interface and displayed icons are known in the art. Generally speaking, icons each serve to represent a corresponding program, process, application, function, capability, media file, Internet address, personal information management (PIM) record, or the like. In many cases a plurality of such icons are presented using, for example a touch-sensitive display.

As various devices become ever more capable, and as the device users themselves expect an ever-increasing number of capabilities from their devices, it is not unusual for a device's display to be of insufficient size to adequately and simultaneously present all or even most of the icons with which that device is provisioned. To accommodate such a circumstance many such devices utilize scrolling to present only a subset of the provisioned icons. This scrolling serves to remove some icons from the display while moving other icons onto the display.

US 2010/0277420 A1 relates to a method and hand held electronic device providing for performing a dual sided gesture on respective touch sensitive surfaces on the front and back sides of the hand held electronic device having a 3D display with multiple overlapping layered transparent displays. The ability to interact with multiple different touch sensitive surfaces allows a user in one example to rotate a displayed object by simultaneously touching the front and back surfaces of the hand held electronic device with a respective finger and moving the fingers in opposite directions. In another example, where multiple objects are displayed on the respective layered displays to be simultaneously viewable by the user as being superimposed upon one another at different levels of depth, the particular touch sensitive surface with which the user interacts can be used to differentiate which one of the multiple stacked objects the user is interacting with. In particular, interacting with the touch sensitive surface on the back of the device allows to select and manipulate objects from the bottom of the stack, and interacting with the touch sensitive surface on the front of the device allows to select and manipulate objects from the top of the stack.

US 2006/0236251 A1 relates to a thumbnail screen, categories and category thumbnails are disposed and displayed in depth (Z-axis) direction and in the horizontal (X-axis) direction, respectively. When focus is given by a focus to any of upper and lower category thumbnails, which are displayed on the most front side, and a category name display part, the row (layers) of the thumbnails scrolls in the horizontal direction. When the right and left direction keys of a remote controller are operated, while the category name display has focus, the scroll in the depth direction is performed, thus enabling the specification of a desired category. If the keys of the remote controller are not operated for a predetermined time, automatic scrolling in the depth direction may start. This three-dimensionally displays the thumbnails and facilitates the operation for viewing information.

EP 1873702 A1 relates to information processing apparatus including a 3D (three dimensional)-matrix arranging portion and a luminance/transmittance display controller portion. When a plurality of contents are list-displayed, the 3D-matrix arranging portion arranges the plurality of contents in a 3D-matrix-like form ("3D-matrix," hereinbelow) in accordance with predetermined three axes. The 3D matrix includes a plurality of planes each containing a group of contents of the plurality of contents. The luminance/transmittance display controller portion displays on a display portion the respective groups of contents of the plurality of contents arranged in the 3D matrix, in a manner that luminance is gradually reduced in a direction from contents on a front-most plane of the plurality of planes to contents on a rear-most plane, and transmittance is gradually increased in the direction from the contents on the front-most plane to the contents on the rear-most plane.

EP 1667471 A1 relates to a portable communication device comprising: a display unit for displaying a multi-dimensional image having at least three dimensions; a multi-dimensional image control unit controlling and providing said image to be displayed in more than one plane depending on a selection of a user; a detector for detecting a selection of the user.

The present invention is set out in the independent claims, with some optional features set out in the claims dependent thereto.

### Brief Description of the Drawings

FIG. 1 comprises a flow diagram as configured in accordance with various aspects of the disclosed concept;
FIG. 2 comprises a perspective schematic view as configured in accordance with various aspects of the disclosed concept;
FIG. 3 comprises a perspective schematic view as configured in accordance with various aspects of the disclosed concept;
FIG. 4 comprises a perspective schematic view as configured in accordance with various aspects of the disclosed concept; and
FIG. 5 comprises a block diagram as configured in accordance with various aspects of the disclosed concept.

Elements in the figures are illustrated for simplicity and clarity and have not necessarily been drawn to scale. For example, the dimensions, relative positioning, or both of some of the elements in the figures may be exaggerated relative to other elements to help to improve understanding of various aspects of the disclosed concept. Also, common but well-understood elements that are useful in a commercially feasible implementation may be omitted from the figures in order to facilitate a less obstructed view of these various aspects of the disclosed concept.

### Detailed Description

The present disclosure describes a user interface that employs a three-dimensional display. In this disclosure, a three-dimensional (3D) display is any display apparatus capable of conveying a stereoscopic perception of 3D depth to a viewer, and may hereafter be referred to as a "display" or "stereoscopic display" for the sake of brevity. It should be understood that a three-dimensional display may, by one approach, utilize dual two dimensionally displayed images (one for each eye of the viewer) to create a virtual three-dimensional image. The generation of a virtual three-dimensional image or icon using a 3D display may be referred to as "presenting" the image because the image may be perceived by the viewer to appear at various distances from the viewer without regard to the physical location of the 3D display apparatus. In this disclosure, "presenting" refers to the use of a three-dimensional display to cause the display of one or more components of an image, such the displayed components create the appearance of a single image perceived by an observer. An image presented at a specific depth of presentation may comprise multiple components of the image that may be mentally combined by the observer to create the appearance of a single image at a depth of presentation (e.g., at a perceived distance) from the observer.

The three-dimensional display serves to present a plurality of icons that are associated with the user interface. The plurality of icons include at least a first icon presented at a first depth of presentation and at least a second icon presented at a second, different depth of presentation. By one approach this first icon is available for interaction by an input component of the user interface while the second icon is unavailable for interaction by the input component of the user interface. This approach facilitates presentation of icons using the three-dimensional display, where only some icons are available for interaction via a particular input component of the user interface.

In this disclosure, an icon that is available for interaction by an input component of a user interface is one that can be selected to invoke a corresponding program, process, application, function, capability, media file, Internet address, personal information management (PIM) record, or the like. An icon that is unavailable for interaction by an input component is said to be presently unavailable for selection, even though the icon may be presented in an incapacitated or inoperative state. In other words, an icon is presented to a viewer (for example, to make the viewer aware of its presence), and is either available or unavailable for selection by interacting with a particular input component. It should be understood that an icon that is unavailable for interaction with a first input component may still be available for interaction with a second input component of the user interface.

In this description, the first input component of the user interface provides for interaction with icons presented at the first depth of presentation. For example, the input component may be a touch-sensitive display, a mouse, a touchpad, a track pad, an electronic pen, a user-interface glove, or other input component configured to allow selection of icons (e.g., available for interaction) presented at the first depth of presentation. The first depth of presentation may be perceived by the viewer to be associated with a selection capability of the input component, while icons (e.g. unavailable for interaction) presented at a second, different depth of presentation may be perceived by the viewer to be unassociated with the selection capability of the input component.

By one approach the aforementioned first depth of presentation can substantially coincide with a surface (such as a control surface) of an electronic device. So configured, the first icon (which is presently available for interaction by an input component of the user interface) appears at a depth of presentation that coincides with the surface. This may be done by presenting the left and right eye images for the first icon at substantially a same location on the three-dimensional display, or by presenting left and right eye images that are substantially identical to each other. When the surface comprises, for example, a touch-sensitive display (as the input component), this approach can facilitate use of the touch-sensitive display when selecting a particular icon that is presented in substantial coincidence with the touch-sensitive display.

So configured, an electronic device may present many (or even all) of the icons with which that device is provisioned, notwithstanding that the physical two-dimensional boundaries of the display apparatus may otherwise be too small to two-dimensionally display all of the provisioned icons. This is because some of the icons can be presented at depths of presentation other than the physical depth of the display apparatus itself.

The disclosed concept may prevent inadvertent assertion of at least some of the icons by limiting selection capability in the user interface to, for example, only icons available for interaction by a particular input component of the user interface. When the icons that are available for interaction are perceived to be associated with a selection capability of the input component or are perceived to coincide in space with the selection capability of the input component, the overall effect is highly intuitive and ergonomically sensible.

These teachings will readily accommodate providing other icons at yet other depths of presentation if desired. As a simple illustrative example in these regards, some icons can be presented at a depth that is perceived to be above the display (i.e., between the display apparatus and the viewer) while other icons are presented at a depth that is perceived to be below the display (i.e., at a depth that is further from the viewer than the display apparatus). This may be done by presenting differing left and right eye images for such icons (e.g. at slightly offset locations) on the three-dimensional display to create the perception of icons at depths above or below the display. In other words, icons may be presented at depths that are perceived to be closer or farther than the physical structure of the display. Icons that are presented at a depth other than the first depth of presentation may be unavailable for interaction by an input component associated with the first depth of presentation.

These teachings will also readily accommodate movement of at least some of the icons from one depth of presentation to another. For example, a user-interface instruction may provide the ability to rearrange the perceived depths of icons, thereby moving icons into a perceived depth allowing interaction with the icons by the input component and moving other icons to a perceived depth making the other icons unavailable for interaction by the input component. Using this approach, for example, an icon that is presently unavailable for interaction by an input component can be moved to a depth of presentation at which the icon becomes presently available for interaction by the input component.

The teachings of this disclosure are particularly well suited to use with devices/displays that, by their very size or form factor, provide an insufficient amount of physical structure to implement a user interface that reasonably accommodates the device's assortment of capabilities. Those skilled in the art will appreciate that these teachings can be implemented in a variety of commercially viable ways. It will further be appreciated that these teachings are highly scalable and can be used with a variety of differently-sized user interfaces, icons, electronic devices, and so forth. These and other benefits may become clearer upon making a thorough review and study of the following detailed description.

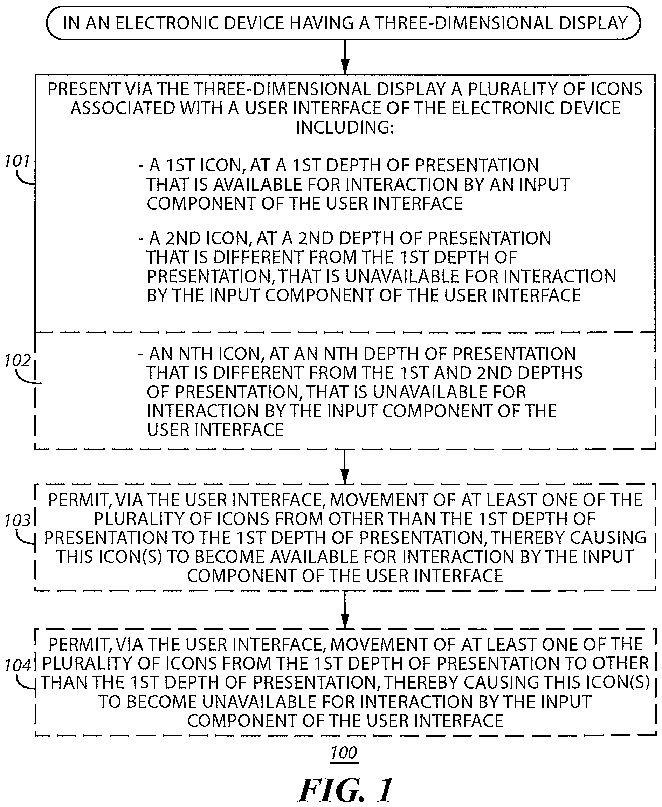

Referring now to the drawings and in particular to FIG. 1, an illustrative process 100 that is compatible with many of these teachings will be described. In this illustrative example, an electronic device carries out the described process 100. Electronic devices referred to in this disclosure may include, for example, portable electronic devices, simple cellular telephones, smart telephones, wireless personal digital assistants (PDAs), laptop computers, tablets, portable gaming devices, televisions, monitors, or other electronic devices. For the purposes of this description the electronic device has at least one three-dimensional display such as, but not limited to, a stereoscopic display.

The expression "three-dimensional display" may refer to a physically two-dimensional active display (such as a liquid-crystal display or a light-emitting diode display) that is capable of portraying a virtual three-dimensional image (either alone or in conjunction with, for example, special lenses through which the viewer gazes at the display). For example, a three-dimensional display comprising a stereoscopic display may present offset images that are displayed separately to the left and right eyes. Both of these 2D offset images are then mentally perceived by the viewer as a single 3D image. Examples of this technology include anaglyph images and polarized glasses. Autostereoscopic display technologies may use optical components in the display, rather than spectacles worn by the viewer, to enable each eye to see a different image. In another example, a three-dimensional display comprising a holographic display may utilize interference of coherent light to create a light field identical to that which would emanate from an image at a particular depth of perception. Still further examples of technologies suitable for three-dimensional displays may include volumetric displays, lenticular displays, or free-space displays.

Various three-dimensional displays are known in the art and other approaches will likely be developed going forward. It should be understood that three-dimensional displays in this disclosure may comprise any display apparatus capable of conveying the appearance of an icon at various depths of perception. As the present teachings are not particularly sensitive to any specific choices in these regards, further elaboration here will not be provided for the sake of brevity.

At step 101 this process 100 provides for presenting, via the aforementioned three-dimensional display, a plurality of icons. These icons are associated with a user interface that corresponds to the electronic device. For example, these icons represent an associated program, process, data, or other application that are, at least under some circumstances, selectable by an input component of the user interface. For the sake of illustration and not by way of limitation, a particular icon may be associated with any of a variety of applications (i.e., so-called "apps").

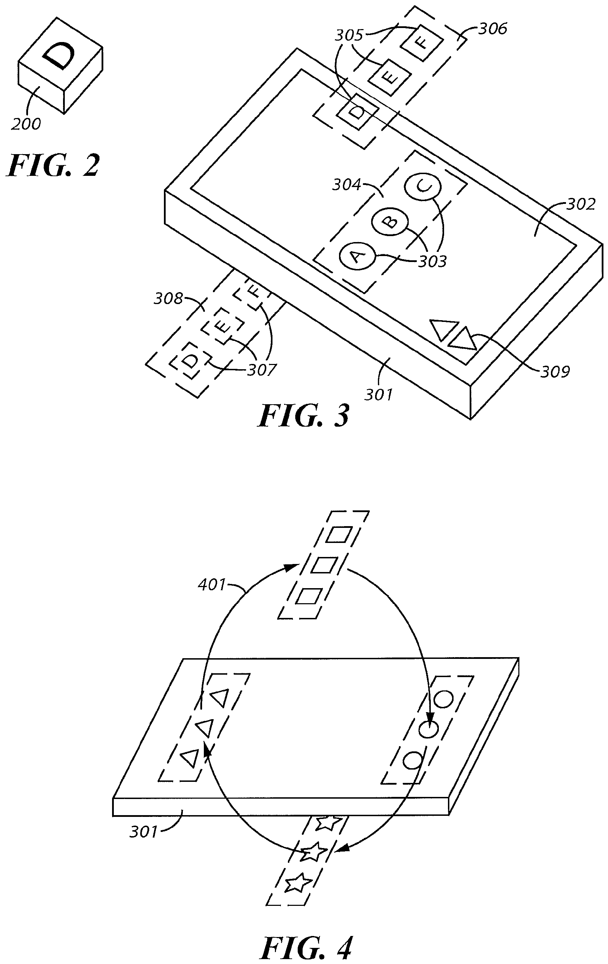

By one approach, at least some of these icons can comprise two-dimensional images. If desired, however, and continuing to presume upon the capabilities of the three-dimensional display, one or more of these icons can themselves comprise a three-dimensional image. Referring momentarily to FIG. 2, a simple illustrative example in these regards comprises a virtual three-dimensional button that presents a corresponding icon (here, the alphabetic character "D").

Returning again to FIG. 1, at step 101 this presentation of icons includes presenting at least a first icon and a second icon where these icons are presented at differing depths of presentation. That is, to a viewer of the display who is able to discern the three-dimensional content thereof, one of these depths of presentation will appear, for example, to be closer to the viewer than the other.

FIG. 3 provides an illustrative example in these regards. In this example the electronic device 301 of interest has a three-dimensional touch-screen display 302. This display 302 presents a first group of icons 303 at a first depth of presentation 304 and a second group of icons 305 at a second, different depth of presentation 306. In this particular example it may be noted that the first depth of presentation 304 also substantially coincides with a surface of the electronic device 301 (i.e., the outer surface of the display 302). Accordingly, the first group of icons 303 that are presented at that first depth of presentation 304 also at least substantially coincide visually with that surface.

The difference in distance between these two depths of presentation 304 and 306 can vary according to design considerations of the user interface and electronic device. In particular, the distance can be as subtle, or as striking, as may suit the needs or opportunities as tend to characterize a particular user interface.

It will also be understood that the displayed icons can be laterally offset from one another as desired. For example, by one approach, the icons appearing at differing depths of presentation can be substantially coincident such that they appear to be layered, offset, or even stacked one above the other. In such a case it may be useful to present at least the higher-level icons in a transparent or translucent manner to permit lower-level icons to be readily perceivable by the viewer. As another example, and again as desired, the icons appearing at differing depths of presentation can be laterally offset from one another to avoid having icons at higher levels occluding part or all of the icons that appear at lower depths of presentation.

Referring still to both FIGS. 1 and 3, the icons presented at the first depth of presentation (these being the icons 303 in FIG. 3 that are coincident with the surface of the electronic device 301) are available for interaction via an input component of the user interface. Conversely, the icons presented at the second depth of presentation (these being the icons 305 in FIG. 3 that are not coincident with the surface of the electronic device 301) are unavailable for interaction by the input component of the user interface. (As used herein, "interaction" shall be understood to comprise asserting or identifying an icon in order to activate (or return to) a corresponding capability as a direct consequence and result of having so chosen or identifying that icon.)

This availability and unavailability to interact with an icon using an input component can be intuitively understood by the viewer. In particular, the input component may provide for interaction only with icons presented at the first depth of presentation, and may not provide for interaction with icons presented at other depths of presentation. For example, using FIG. 3, the icons 303 may be presented at a depth of presentation 304 that at least substantially coincides with a touch-sensitive surface of the display 302, and are available for interaction by the touch-sensitive surface. The icons 303 are readily understood as being invoked by merely touching the touch-sensitive surface of the display 302 at the location in which the icon 303 is presented. Conversely, the icons 305 being presented at the second depth of presentation 306 are not coincident with the touch-sensitive surface and are unavailable for interaction by the touch-sensitive surface. Attempts to touch icons 305 will not result in physical contact with the touch-sensitive surface and hence will not result in invoking the item associated with such an icon.

In the illustrative examples described above the three-dimensional display employs two different depths of presentation, one depth of presentation having one or more icons that are available for interaction via an input component of the user interface and the other depth of presentation having one or more icons that are unavailable for interaction by that input component. These teachings will readily support, however, optionally using additional depths of presentation for other icons as desired. As illustrated in FIG. 1, this can comprise the optional step 102 of using up to N depths of presentation (where "N" comprises an integer greater than "2") that are different from the aforementioned first and second depths of presentation. In such a case, for example, any icons presented at these additional depths of presentation can also comprise icons that are presently unavailable for interaction via the input component of the user interface.

Accordingly, by employing this optional approach, the display can contemporaneously present: (1) one or more icons at a first depth of presentation (which may at least substantially coincide with an input component of a user interface of the corresponding electronic device) that are available for interaction via the input component, (2) one or more icons at a second, different depth of presentation that are not available for interaction via the input component, and (3) one or more icons at a third (or more) depth of presentation (that is different from both the first and second depths of presentation) that are also not available for interaction via the input component. Referring again momentarily to FIG. 3, for example, these latter icons 307 and their corresponding third depth of presentation 308 can appear to be behind the electronic device 301, though any number of other possibilities can be readily accommodated.

Those skilled in the art will recognize and understand that there are no particular limitations in these regards as to how many icons are presented nor how many different depths of presentation are employed in a particular implementation. These teachings will also accommodate providing more than one cluster of grouped icons at a given, shared depth of presentation if desired. For example, a first group of three icons could be presented at one portion of any of the depicted depths of presentation and a second group of icons could also be presented at a different, removed portion of that same depth of presentation.

For many implementations it may be useful to move these icons from one depth of presentation to another. By one approach this could occur automatically. For example, and presuming for the sake of simplicity that there are only two depths of presentation in the example, a first icon could be presented at the first depth of presentation for a predetermined period of time (such as five seconds, one minute, or such other period of time as may be desired). This first icon could then be automatically moved to the second depth of presentation. By one approach this icon could continue to automatically shift back and forth between these two depths of presentation in such a manner. In such a case, and presuming for the sake of example a fifty-percent duty cycle, this icon would be available for present selection by the user about half the time (as the icon would occupy the depth of presentation that corresponds to being available about half the time).

It should be understood that a user interface may disable, restrain, ignore, treat, or otherwise make icons presented at the second depth of presentation unavailable for interaction with a particular input component of the user interface. By one approach, the user interface may refrain from responding to a detected input associated with a disabled icon at the input component. Icons that are presented at the second depth of presentation may be considered unavailable by virtue of the type of input component. For example, where the input component is a touch-sensitive surface of the electronic devices, icons that are presented at the depth of presentation associated with the touch-sensitive surface are available for selection by detecting a touch on the touch-sensitive service (e.g., touching the surface at a location where the icon is presented). Icons presented above or below the touch-sensitive surface may be said to be made unavailable, disabled, or treated as unavailable due to the inability to detect a touch associated with such an icon.

These teachings will also accommodate, if desired, optionally permitting via the user interface selectively effecting such movement. The aforementioned electronic device 301, for example, could provide a further input component 309 of the user interface to permit control over such movement. The further input component may comprise a button, key, scroll wheel, track pad, touch pad, portion of a touch-sensitive display, or other control surface. Alternatively, the further input component may comprise an accelerometer, gyroscope, proximity sensor, camera, or other apparatus capable of detecting a change in the environment, where the change is associated with a command to effect such movement. These teachings will accommodate other approaches in these regards as well, as desired. For example, when the electronic device has a user interface that supports gesture recognition, a user gesture can suffice to effect the desired icon movement. As another example in these regards, when the electronic device has a user interface that supports voice recognition, a particular spoken instruction can similarly suffice in these same regards. As yet another example in these regards, when the electronic device has a user interface that supports an accelerometer, a movement of the electronic device toward or away from the viewer may be used to change the enablement or disablement property of icons at various depths of perception (e.g., enabling the icons at the depth of perception which the electronic device physically occupies).

Referring again to FIG. 1, at optional step 103, this process 100 can permit (for example, using an instruction in the input component of the user interface, or using a further input component of the user interface) movement of at least one of the plurality of icons from other than the first depth of presentation to the first depth of presentation. This could comprise, for example, moving a selected icon or all of the icons (as a group) from the second depth of presentation to that first depth of presentation. As described above, this will cause the moved icon(s) to become available for interaction by the input component of the user interface (as it is the first depth of presentation in this illustrative example that contains the presently available icons).

This process 100, at optional step 104, can also facilitate an opposite action; that is, moving at least one of the plurality of icons from the first depth of presentation to other than the first depth of presentation (such as, for example, to the aforementioned second depth of presentation). This, of course, will cause the moved icons to become presently unavailable for interaction by the input component of the user interface. By one approach, these two steps 103 and 104 can occur functionally simultaneously. In this case, as icons are being moved from the second depth of presentation to the first depth of presentation, the icons at the first depth of presentation are being moved to the second depth of presentation.

This movement of icons can occur in a visually step-wise manner if desired. Using this approach, the icons will simply disappear from one depth of presentation and appear at another. Using another approach, a more fluid, animated technique can serve to cause the icons to visually appear to traverse a particular path when moving from one depth of perception to another. When using an animated path approach, the path can comprise a shortest-distance between the two depths of presentation or can represent a path having some shape of interest. For example, and referring momentarily to the illustrative example provided by FIG. 4, the path 401 could comprise an arc, circle, or other non-linear shape of choice. These teachings will also accommodate having each icon traverse an independent and different path shape as compared to other icons that are moving from the same depth of presentation if desired.

This movement of icons from one depth of presentation to another can be accompanied by other visual events if desired. These teachings will also accommodate rendering audio content of interest while moving the icons from one depth to another if desired.

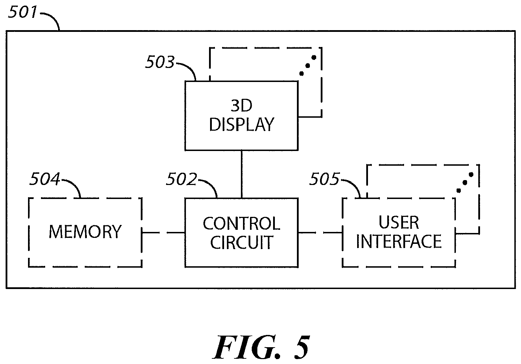

The above-described processes are readily enabled using any of a wide variety of available, readily-configured platforms, including partially or wholly programmable platforms as are known in the art or dedicated purpose platforms as may be desired for some applications. Referring now to FIG. 5, an illustrative approach to such a platform is described.

In this illustrative example the enabling platform 501 comprises a portable electronic device. As explained above, however, any number of devices can readily serve in these same regards as desired. This platform 501 comprises, at least in part, a control circuit 502 that operably couples to one or more three-dimensional displays 503. Such a control circuit 502 can comprise a fixed-purpose hard-wired platform or can comprise a partially or wholly programmable platform as desired. This control circuit 502 is configured (for example, by corresponding programming as will be well understood by those skilled in the art) to carry out one or more of the features described herein. For example, programming executed by the control circuit 502 may cause the electronic device to:
use the three-dimensional display 503 to present a virtual three-dimensional scene comprising a plurality of icons, including at least a first icon presented at a first depth of presentation and a second icon presented at a second depth of presentation, where the first and second depths of presentation are different from one another;
wherein the first icon at the first depth of presentation is available for interaction by an input component of the user interface; and
wherein the second icon at the second depth of presentation is unavailable for interaction by the input component of the user interface.

All of these architectural options regarding fixed-purpose designs as well as partial and full programmability are well known and understood in the art and require no further description here.

By one approach this platform 501 can further comprise a memory 504 that operably couples to the control circuit 502 (or, if desired, comprises a part thereof). This memory can serve to store content to be displayed by the three-dimensional display 503 (such as one or more of the icons contemplated herein). When the control circuit 501 comprises a component that is at least partially programmable, this memory 504 can also serve to store the instructions to be carried out by the control circuit 501.

This platform 501 can also comprise one or more user interfaces 505. By one approach such a user interface can comprise a touch-sensitive capability that may comprise a part of one or more of the aforementioned three-dimensional displays 503. This user interface 505 can also accommodate other modalities of interaction as desired, however. For example, this user interface 505 can comprise as well a gesture-recognition interface, a speech-recognition interface, physical (as versus virtual) buttons, switches, scroll wheels, track pads and other touch-sensitive surfaces, cameras, accelerometers, gyroscopes, proximity sensors, or the like, and so forth.

Such an apparatus 500 may be comprised of a plurality of physically distinct elements as is suggested by the illustration shown in FIG. 5. It is also possible, however, to view this illustration as comprising a logical view, in which case one or more of these elements can be enabled and realized via a shared platform.

So configured, an electronic device having a three-dimensional display capability can simultaneously present, in a useful and intuitive manner, more icons than could otherwise reasonably be contemporaneously presented in the physical area of the three-dimensional display. Presuming the availability of the three-dimensional display itself, these teachings can be readily implemented in highly cost-effective ways and often without requiring other dedicated physical components.

In one approach, the present disclosure provides a method and apparatus for presenting via the three-dimensional display a plurality of icons associated with a user interface of the electronic device, the plurality of icons including a first icon presented at a first depth of presentation and a second icon presented at a second depth of presentation different from the first depth of presentation, making the first icon at the first depth of presentation available for interaction by an input component of the user interface, and making the second icon at the second depth of presentation unavailable for interaction by the input component of the user interface. In another approach, the method may comprise enabling the first icon at the first depth of presentation for interaction by the input component of the user interface, and disabling the second icon at the second depth of presentation for interaction by the input component of the user interface.

In yet another approach, the present disclosure provides a method and apparatus for presenting via a three-dimensional display a first icon at a first depth of presentation associated with a user input of a user interface, presenting via the three-dimensional display a second icon at a second depth of presentation not associated with the user input of the user interface, and receiving a selection of the first icon via the user input, wherein the second icon is presently unavailable for interaction by the input component.

The present teachings disclose a user interface having an input component that provides for interaction with icons that are presented at a first depth of presentation, and that does not provide for interaction with icons that are presented at depths of presentation other than the first depth of presentation.

It should be understood that the terms and expressions used herein have the ordinary technical meaning as is accorded to such terms and expressions by persons skilled in the technical field as set forth above except where different specific meanings have otherwise been set forth herein. Certain actions or steps may be described or depicted in a particular order of occurrence while those skilled in the art will understand that certain actions or steps may be performed in a variety of sequences without departing from the scope of the present invention as defined by the claims.

## Claims

1. A method (100) in an electronic device (301) having a touch-sensitive surface that constitutes a touch-sensitive input component of a user interface (505) of the electronic device, and a display apparatus (302, 503) capable of conveying stereoscopic perception of three-dimensional depth to a viewer, the method comprising:
concurrently presenting (101) via the display apparatus, utilizing dual two-dimensionally displayed images, a plurality of icons in a multi-depth virtual three-dimensional image, the plurality of icons being associated with the user interface of the electronic device and including a first icon (303) presented at a first depth of presentation (304) that is substantially coincident with the touch-sensitive surface of the electronic device (301) and a second icon (305) presented at a second depth of presentation (306) different from the first depth of presentation and substantially not coincident with the touch-sensitive surface of the electronic device; and
automatically moving at least some of the plurality of icons from one depth of presentation to another depth of presentation, by
moving the first icon at the first depth of presentation to the second depth of presentation; and
moving the second icon at the second depth of presentation to the first depth of presentation;
wherein automatically moving the at least some of the plurality of icons occurs after the first icon has been presented at the first depth of presentation for a predetermined period of time; and
wherein only icons at the first depth of presentation coincident with the touch-sensitive surface of the electronic device are available for interaction by the touch-sensitive surface; and
icons at other than the first depth of presentation are unavailable for interaction by the touch-sensitive surface.

2. The method of claim 1, wherein the user interface of the electronic device has a second input component comprising at least one of a keypad, a keyboard, and a button.

3. The method of claim 1 further comprising:
receiving via the touch-sensitive input component a user interface gesture indicative of a selection of the first icon; and
invoking a process associated with the first icon.

4. An electronic device (301) comprising:
a touch-sensitive surface that constitutes a touch-sensitive input component of a user interface (505) of the electronic device (301);
a display apparatus (302, 503) capable of conveying stereoscopic perception of three-dimensional depth to a viewer; and
a control circuit (502) configured to practice the method of any of claims 1-3.

5. A computer readable medium having computer executable instructions adapted, when executed by the control circuit (502) of the electronic device (301) of claim 4, to cause the control circuit (502) to perform the method of any of claims 1-3.

## Patentansprüche

1. Verfahren (100) in einer elektronischen Vorrichtung (301) mit einer berührungsempfindlichen Oberfläche, die eine berührungsempfindliche Eingabekomponente einer Benutzeroberfläche (505) der elektronischen Vorrichtung bildet, und einer Anzeigevorrichtung (302, 503), die in der Lage ist, einem Betrachter eine stereoskopische Wahrnehmung von dreidimensionaler Tiefe zu vermitteln, wobei das Verfahren umfasst:
gleichzeitiges Darstellen (101), über die Anzeigevorrichtung unter Verwendung von doppelt zweidimensionalen Bildern, einer Vielzahl von Icons in einem mehrere Tiefen aufweisenden virtuellen dreidimensionalen Bild, wobei die Vielzahl von Icons der Benutzeroberfläche der elektronischen Vorrichtung zugeordnet ist und ein erstes Icon (303), das in einer ersten Darstellungstiefe (304) dargestellt wird, die im Wesentlichen mit der berührungsempfindlichen Oberfläche der elektronischen Vorrichtung (301) zusammenfällt, und ein zweites Icon (305), das in einer zweiten Darstellungstiefe (306) dargestellt wird, die sich von der ersten Darstellungstiefe unterscheidet und im Wesentlichen nicht mit der berührungsempfindlichen Oberfläche der elektronischen Vorrichtung zusammenfällt, umfasst; und
automatisches Verschieben von mindestens einigen der Vielzahl von Icons von einer Darstellungstiefe in eine andere Darstellungstiefe, durch
Verschieben des ersten Icons in der ersten Darstellungstiefe in die zweite Darstellungstiefe; und
Verschieben des zweiten Icons in der zweiten Darstellungstiefe in die erste Darstellungstiefe;
wobei das automatische Versschieben der mindestens einigen von der Vielzahl von Icons erfolgt, nachdem das erste Icon in der ersten Darstellungstiefe für eine vorbestimmte Zeitdauer dargestellt wurde; und
wobei nur Icons in der ersten Darstellungstiefe, die mit der berührungsempfindlichen Oberfläche der elektronischen Vorrichtung zusammenfällt, für die Interaktion durch die berührungsempfindliche Oberfläche verfügbar sind; und
Icons in einer anderen als der ersten Darstellungstiefe für die Interaktion durch die berührungsempfindliche Oberfläche nicht verfügbar sind.

2. Verfahren nach Anspruch 1, wobei die Benutzeroberfläche der elektronischen Vorrichtung eine zweite Eingabekomponente aufweist, die mindestens eines von einem Tastenfeld, einer Tastatur und einer Schaltfläche umfasst.

3. Verfahren nach Anspruch 1 ferner umfassend:
Empfangen, über die berührungsempfindliche Eingabekomponente, einer Geste der Benutzeroberfläche, die eine Auswahl des ersten Icons anzeigt; und
Aufrufen eines Prozesses, der dem ersten Icon zugeordnet ist.

4. Elektronische Vorrichtung (301), umfassend:
eine berührungsempfindliche Oberfläche, die eine berührungsempfindliche Eingabekomponente einer Benutzeroberfläche (505) der elektronischen Vorrichtung (301) bildet; eine Anzeigevorrichtung (302, 503), die in der Lage ist, einem Betrachter eine stereoskopische Wahrnehmung von dreidimensionaler Tiefe zu vermitteln; und
eine Steuerschaltung (502), die dazu konfiguriert ist, das Verfahren nach einem der Ansprüche 1-3 auszuführen.

5. Computerlesbares Medium mit computerausführbaren Anweisungen, die geeignet sind zu bewirken, wenn sie von der Steuerschaltung (502) der elektronischen Vorrichtung (301) nach Anspruch 4 ausgeführt werden, dass die Steuerschaltung (502) das Verfahren nach einem der Ansprüche 1-3 durchzuführt.

## Revendications

1. Procédé (100) dans un dispositif électronique (301) ayant une surface tactile qui constitue un composant d'entrée tactile d'une interface utilisateur (505) du dispositif électronique, et un appareil d'affichage (302, 503) capable de transporter une perception stéréoscopique de profondeur tridimensionnelle vers un spectateur, le procédé comprenant :
la présentation simultanée (101) par l'intermédiaire de l'appareil d'affichage, à l'aide d'images affichées en deux dimensions, d'une pluralité d'icônes dans une image tridimensionnelle virtuelle à profondeurs multiples, la pluralité d'icônes étant associées à l'interface utilisateur du dispositif électronique et comportant une première icône (303) présentée à une première profondeur de présentation (304) qui coïncide sensiblement avec la surface tactile du dispositif électronique (301) et une seconde icône (305) présentée à une seconde profondeur de présentation (306) différente de la première profondeur de présentation et qui ne coïncide pas sensiblement avec la surface tactile du dispositif électronique ; et
le déplacement automatique d'au moins une partie de la pluralité d'icônes d'une première profondeur de présentation à une autre profondeur de présentation, par
le déplacement de la première icône à la première profondeur de présentation vers la seconde profondeur de présentation ; et
le déplacement de la seconde icône à la seconde profondeur de présentation vers la première profondeur de présentation ;
dans lequel le déplacement automatique de l'au moins une partie de la pluralité d'icônes se produit une fois que la première icône a été présentée à la première profondeur de présentation pendant une période de temps prédéterminée ; et
dans lequel seules les icônes à la première profondeur de présentation qui coïncident avec la surface tactile du dispositif électronique sont disponibles pour une interaction par la surface tactile ; et
des icônes à une autre que la première profondeur de présentation sont disponibles pour une interaction par la surface tactile.

2. Procédé selon la revendication 1, dans lequel l'interface utilisateur du dispositif électronique a un second composant d'entrée comprenant au moins l'un parmi un pavé numérique, un clavier et un bouton.

3. Procédé selon la revendication 1 comprenant en outre :
la réception par l'intermédiaire du composant d'entrée tactile d'un geste d'interface utilisateur indiquant une sélection de la première icône ; et
l'invocation d'un processus associé à la première icône.

4. Dispositif électronique (301) comprenant :
une surface tactile qui constitue un composant d'entrée tactile d'une interface utilisateur (505) du dispositif électronique (301) ;
un appareil d'affichage (302, 503) capable de transporter une perception stéréoscopique de profondeur tridimensionnelle vers un spectateur ; et
un circuit de commande (502) configuré pour mettre en pratique le procédé selon l'une quelconque des revendications 1 à 3.

5. Support lisible par ordinateur ayant des instructions exécutables par ordinateur conçu, lorsqu'il est exécuté par le circuit de commande (502) du dispositif électronique (301) selon la revendication 4, pour amener le circuit de commande (502) à exécuter le procédé selon l'une quelconque des revendications 1 à 3.
